# EUROPEAN PATENT SPECIFICATION

(11) **EP 3 297 369 B1**
(45) Date of publication and mention of the grant of the patent: **15.11.2023**
(21) Application number: 16835244.1
(22) Date of filing: 12.08.2016
(51) Int. Cl.: H04L 1/18, H04L 1/08, H04W 72/04, H04W 28/04

(54) **USER TERMINAL, WIRELESS BASE STATION, AND WIRELESS COMMUNICATION METHOD**
BENUTZERENDGERÄT, DRAHTLOSE BASISSTATION UND DRAHTLOSKOMMUNIKATIONSVERFAHREN
TERMINAL UTILISATEUR, STATION DE BASE SANS FIL ET PROCÉDÉ DE COMMUNICATION SANS FIL

(30) Priority: 13.08.2015 JP 2015159984
(43) Date of publication of application: 21.03.2018
(73) Proprietor: NTT DOCOMO, INC., Chiyoda-ku Tokyo 100-6150 (JP)
(72) Inventor: TAKEDA, Kazuaki, Tokyo 100-6150 (JP); JIANG, Huiling, Beijing 100190 (CN); LIU, Liu, Beijing 100190 (CN); MU, Qin, Beijing 100190 (CN)
(74) Representative: Hoffmann Eitle
(86) International application number: PCT/JP2016/073774
(87) International publication number: WO 2017/026548

(56) References cited:
- EP-A1- 3 244 553
- SAMSUNG: 'DL/UL HARQ timing for low cost MTC UEs in enhanced coverage' 3GPP TSG-RAN WG1#81 R1- 152846, [Online] 15 May 2015, XP050970459 Retrieved from the Internet: <URL:http://www.3gpp.org/ftp/ tsg_ran/WG1_RL1/TSGR1_81/Docs/Rl-152846.zip > [retrieved on 2016-08-25]
- NOKIA NETWORKS: 'M-SIB1 analysis for Low cost MTC' 3GPP TSG-RAN WG2#89BIS R2-151141, [Online] 10 April 2015, XP050952926 Retrieved from the Internet: <URL:http://www.3gpp.org/ftp/tsg_ran/WG2_RL 2/ TSGR2_89bis/Docs/R2-151141.zip> [retrieved on 2016-08-25]
- RAN WG2: 'LS on system information broadcast, mobility support, and random access for Rel-13 LC/CE Ues' 3GPP TSG-RAN WG2#90 R2-152934 25 June 2015, XP050986288 Retrieved from the Internet: <URL:http://www.3gpp.org/ftp/tsg_ran/ WG2_RL2/TSGR2_90/Docs/R2-152934.zip> [retrieved on 2016-08-25]
- ZTE: 'Detailed design on M-PDCCH for MTC enhancement' 3GPP TSG-RAN WG1#81 R1-152956, [Online] 15 May 2015, XP050969465 Retrieved from the Internet: <URL:http://www.3gpp.org/ftp/tsg_ran/ WG1_RL1/TSGR1_81/Docs/R1-152956.zip> [retrieved on 2016-08-25]
- HUAWEI ET AL.: 'Considerations on blind decoding for MTC UEs' 3GPP TSG-RAN WG1#81 R1- 152447, [Online] 16 May 2015, XP050970887 Retrieved from the Internet: <URL:http://www.3gpp.org/ftp/ tsg_ran/WG1_RL1/TSGR1_81/Docs/R1-152447.zip > [retrieved on 2016-08-25]
- HUAWEI ET AL.: 'Configuring combinations of repetition level and aggregation level' 3GPP TSG-RAN WG1#81 R1-152448, [Online] 16 May 2015, XP050970888 Retrieved from the Internet: <URL:http://www.3gpp.org/ftp/tsg_ran/WG1_RL 1/TSGR1_ 81/Docs/Rl-152448.zip> [retrieved on 2016-08-25]
- NTT DOCOMO: 'Views on UL HARQ feedback for Rel- 13 low complexity MTC' 3GPP TSG-RAN WG1#82 R1- 154529, [Online] 14 August 2015, XP050993279 Retrieved from the Internet: <URL:http://www.3gpp.org/ftp/ tsg_ran/WG1_RL1/TSGR1_82/Docs/R1-154529.zip > [retrieved on 2016-08-25]

## Description

### Technical Field

The present invention relates to a user terminal, a radio base station and a radio communication method in next-generation mobile communication systems.

### Background Art

In the UMTS (Universal Mobile Telecommunications System) network, the specifications of long term evolution (LTE) have been drafted for the purpose of further increasing high speed data rates, providing lower delays and so on (see non-patent literature 1). Also, successor systems of LTE (referred to as, for example, "LTE-A" (LTE-Advanced), "FRA" (Future Radio Access), "4G," "5G," and so on) are under study for the purpose of achieving further broadbandization and increased speed beyond LTE.

Now, accompanying the cost reduction of communication devices in recent years, active development is in progress in the field of technology related to machine-to-machine communication (M2M) to implement automatic control of network-connected devices and allow these devices to communicate with each other without involving people. In particular, 3GPP (3rd Generation Partnership Project) is promoting the standardization of MTC (Machine-Type Communication) for cellular systems for machine-to-machine communication, among all M2M technologies (see non-patent literature 2). User terminals for MTC (MTC UE (User Equipment)) are being studied for use in a wide range of fields such as, for example, electric meters, gas meters, vending machines, vehicles and other industrial equipment.

Document SAMSUNG: "DL/UL HARQ timing for low cost MTC UEs in enhanced coverage", 3GPP TSG-RAN WG1 #81 R1 - 152846, 15 May 2015 (2015-05-15), XP050970459,discusses DL/UL HARQ timing for low cost MTC UEs in enhanced coverage and discusses PUSCH-to-HARQ-ACK timing in FDD. Specifically, this document discusses repeated UL HARQ transmission based on the n+4 rule where UL HARQ are transmitted four sub-frames after PUSCH transmission.

### Citation List

### Non-Patent Literature

Non-Patent Literature 1: 3GPP TS 36.300 "Evolved Universal Terrestrial Radio Access (E-UTRA) and Evolved Universal Terrestrial Radio Access Network (E-UTRAN); Overall Description; Stage 2"
Non-Patent Literature 2: 3GPP TS 36.888 "Study on provision of low-cost Machine-Type Communications (MTC) User Equipments (UEs) based on LTE (Release 12)"

### Summary of Invention

### Technical Problem

From the perspective of reducing the cost and improving the coverage area in cellular systems, in MTC, user terminals for MTC (LC (Low-Cost) MTC UEs, hereinafter referred to simply as "MTC terminals") that can be implemented in simple hardware structures have been increasingly in demand. MTC terminals can be implemented by limiting the uplink (UL) band and the downlink (DL) band to partial frequency blocks in a system band. These frequency blocks are formed to be, for example, 1.4 MHz, and are also referred to as "narrow bands" (NBs).

However, when communication techniques for conventional user terminals (for example, LTE terminals) and radio base stations are applied to MTC terminals that are limited to using partial resource blocks in a system band as bands for their use, there is a threat that the MTC terminals cannot communicate with radio base stations adequately.

For example, transmission acknowledgment information (HARQ-ACK: Hybrid Automatic Repeat reQuest-ACKnowledgement) in response to an uplink data signal (for example, an uplink shared channel (PUSCH: Physical Uplink Shared Channel)) is transmitted to an existing LTE terminal in the subframe (#k+4) that comes 4 ms after the subframe (#k) in which this uplink data signal is transmitted, by using a downlink control signal (for example, a downlink control channel (PDCCH (Physical Downlink Control Channel) or EPDCCH (Enhanced PDCCH)). Meanwhile, since the subframes that can transmit downlink control signals for MTC (for example, MPDCCH (Machine type communication PDCCH)) are limited, there is a threat that, if existing feedback techniques are used, MTC terminals cannot adequately receive transmission acknowledgment information in response to uplink data signals.

The present invention has been made in view of the above, and it is therefore an object of the present invention to provide a user terminal, a radio base station and a radio communication method, whereby transmission acknowledgment information in response to uplink data signals can be received adequately when the bands for use are limited to partial frequency blocks in a system band.

### Solution to Problem

The mentioned problems are solved by the subject-matter of the independent claims. Further preferred embodiments are defined in the dependent claims.

### Advantageous Effects of Invention

According to the present invention, transmission acknowledgment information in response to uplink data signals can be received adequately when the bands for use are limited to partial frequency blocks in a system band.

### Brief Description of Drawings

FIG. 1 is a diagram to explain the bands for use for LTE terminals and MTC terminals;
FIG. 2A and FIG. 2B provide diagrams to explain the arrangement of a narrow band that serves as a band for use for MTC terminals;
FIG. 3 is a diagram to show an example of feedback of transmission acknowledgment information;
FIG. 4 is a diagram to show examples of MPDCCH starting subframes;
FIG. 5 is a diagram to show an example of a case where transmission acknowledgment information cannot be received;
FIG. 6 is a diagram to show another example of a case where transmission acknowledgment information cannot be received;
FIG. 7 is a diagram to show an example of feedback of transmission acknowledgment information according to a first embodiment;
FIG. 8 is a diagram to show feedback of transmission acknowledgment information according to the present invention;
FIG. 9 is a diagram to show a schematic structure of a radio communication system according to an embodiment of the present invention;
FIG. 10 is a diagram to show an example of an overall structure of a radio base station according to an embodiment of the present invention;
FIG. 11 is a diagram to show an example of a functional structure of a radio base station according to one embodiment of the present invention;
FIG. 12 is a diagram to show an example of an overall structure of a user terminal according to an embodiment of the present invention; and
FIG. 13 is a diagram to show an example of a functional structure of a user terminal according to an embodiment of the present invention.

### Description of Embodiments

Studies are in progress to simplify the hardware structures of low-cost MTC terminals at the risk of lowering their processing capabilities. For example, studies are in progress to apply limitations to low-cost MTC terminals, in comparison to existing user terminals, by, for example, lowering the peak rate, limiting the transport block size, limiting the resource blocks (also referred to as "RBs," "PRBs" (Physical Resource Blocks), and so on), limiting the RFs to receive, and so on.

Here, existing user terminals are referred to as "LTE terminals," "LTE-A terminal," "LTE UEs" (User Equipment), "normal UEs," and "non-MTC terminals," or may be referred to simply as "user terminals," "UEs," and so on. Also, MTC terminals are referred to simply as "user terminals," "UEs" and so on. Hereinafter, for ease of explanation, existing user terminals will be referred to as "LTE terminals," and user terminals for MTC (low-cost MTC) will be referred to as "MTC terminals."

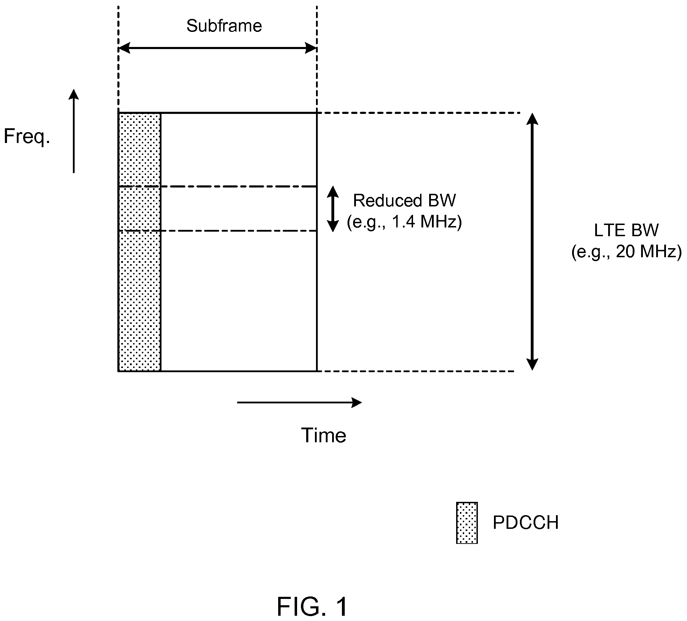

FIG. 1 is a diagram to explain the bands for use for LTE terminals and MTC terminals. As shown in FIG. 1, the maximum band for use for LTE terminals is configured to a system band (for example, 20 MHz (= 100 PRBs), one component carrier, and so on). By contrast, the maximum band for use for MTC terminals is limited to a partial frequency block in a system band (for example, 1.4 MHz (= 6 PRBs)). Hereafter, this frequency block will be also referred to as a "narrow band" (NB).

Furthermore, there is an ongoing study to run MTC terminals in the system bands of LTE/LTE-A. In this case, frequency-division-multiplexing of MTC terminals and LTE terminals can be supported. In this way, MTC terminals may be seen as terminals that support only a partial frequency block (narrow band) in a system band as the maximum band they can support, and seen as user terminals that have the functions to transmit and receive in a narrower band than the system bands of LTE/LTE-A.

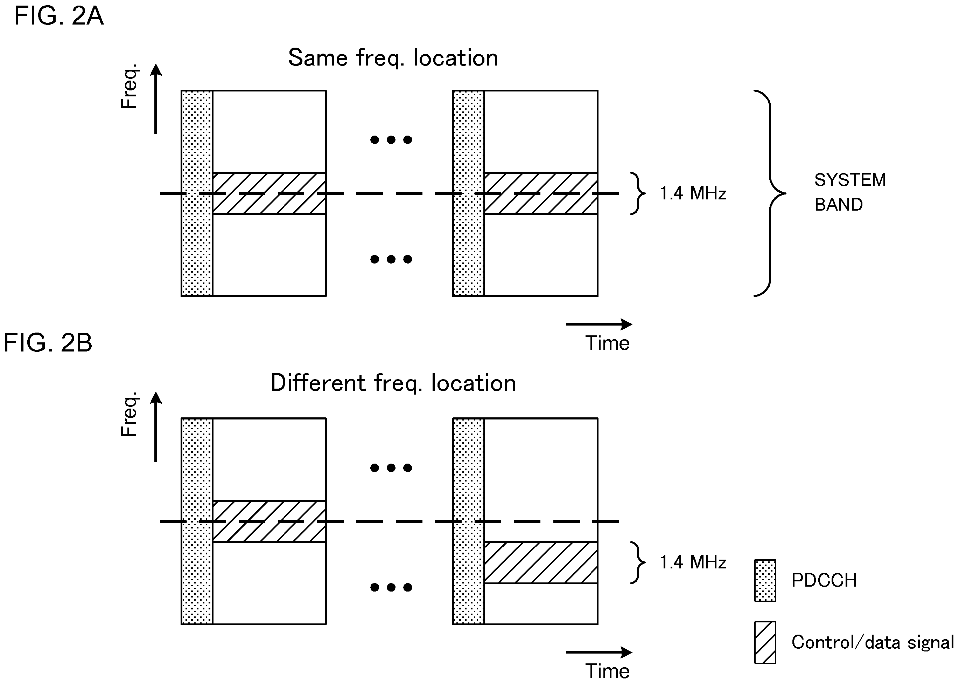

FIGs. 2 provide diagrams to explain the arrangement of a narrow band that serves as a band for use for MTC terminals. As shown in FIG. 2A, a narrow band (for example, 1.4 MHz) may be fixed in a specific frequency location in a system band (for example, 20 MHz). In this case, there is a threat that the traffic concentrates in a specific frequency (for example, the center frequency). Furthermore, since no frequency diversity effect can be achieved, the spectral efficiency might decrease.

So, as shown in FIG. 2B, it may be possible to move a narrow band (for example, 1.4 MHz) to different frequency locations (frequency resources) in a system band (for example, 20 MHz) every predetermined period (every subframe, for example). In this case, the traffic of MTC terminals can be spread out. Furthermore, since a frequency diversity effect can be achieved, it is possible to reduce the decrease of spectral efficiency.

As shown in FIG. 2B, when the frequency location of a narrow band that serves as a band for use for MTC terminals is variable, considering that frequency hopping, frequency scheduling and so on may be applied to the narrow band, MTC terminals should preferably have an RF re-tuning function.

Now, MTC terminals support only a narrow band (for example, 1.4 MHz) in a system band, and cannot detect a downlink control channel (PDCCH: Physical Downlink Control CHannel) that is arranged over the entire system band. Consequently, a study is in progress to allocate resources for a downlink shared channel (PDSCH), an uplink shared channel (PUSCH: Physical Uplink Shared CHannel) and so on, by using a downlink control channel for MTC (MPDCCH: Machine type communication PDCCH) that is arranged in a narrow band.

Here, the MTC downlink control channel (MPDCCH) is a downlink control channel that is transmitted in a narrow band in a system band, and may be frequency-division-multiplexed with a downlink shared channel (PDSCH: Physical Downlink Shared CHannel) for LTE or MTC. The MPDCCH may be referred to as an "M-PDCCH" (Machine-type communication PDCCH), an "enhanced downlink control channel" (EPDCCH: Enhanced Physical Downlink Control CHannel) and so on. Downlink control information (DCI) to include information regarding PDSCH allocation (for example, DL (downlink) grants), information regarding PUSCH allocation (for example, UL (uplink) grants) and suchlike information is communicated by the MPDCCH.

Note that, other than the MPDCCH, any channel that is used by MTC terminals may be represented by affixing an "M," which stands for MTC, to the existing channel that is used for the same purpose. For example, a PDSCH that is allocated by an MPDCCH may be referred to as an "MPDSCH" (Machine type communication PDSCH), an "M-PDSCH" (Machine-type communication PDSCH), and so on. Similarly, a PUSCH that is allocated by an "MPDCCH" may be referred to as an "MPUSCH" (Machine type communication PUSCH), an "M-PUSCH" (Machine-type communication PUSCH), and so on.

Furthermore, in MTC, a study is in progress to allow repetitious transmission/receipt (repetition) across a plurality of subframes for enhanced coverage. In repetitious transmission/receipt, the same downlink signal and/or uplink signal are transmitted/received across a plurality of subframes. An MTC terminal receives and combines downlink signals that are transmitted in repetitions over a plurality of subframes. Similarly, a radio base station receives and combines downlink signals that are transmitted in repetitions over a plurality of subframes.

By combining downlink signals and/or uplink signals across a plurality of subframes, it is possible to fulfill a desirable signal-to-interference-plus-noise ratio (SINR) even when narrow bands are used. As a result of this, MTC coverage can be expanded.

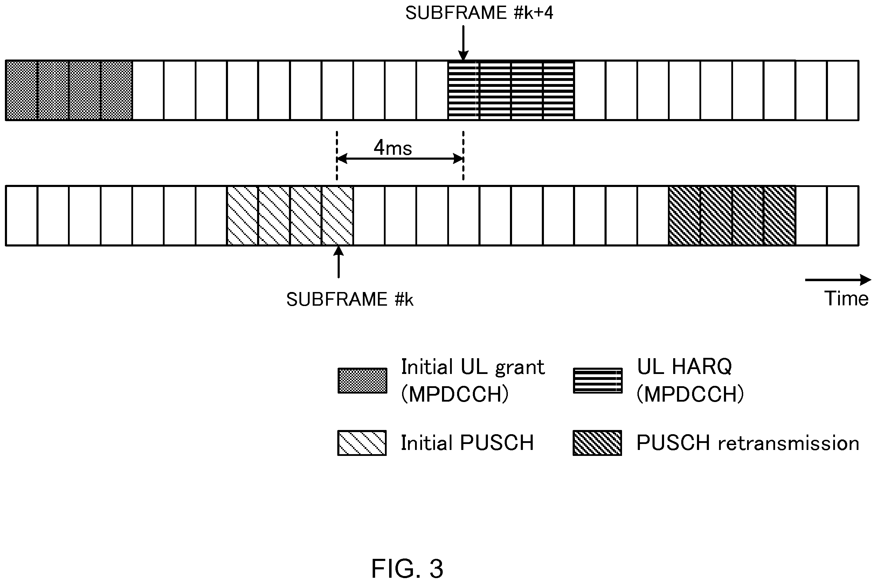

FIG. 3 is a diagram to show an example of feedback of transmission acknowledgment information in response to a PUSCH. Note that, although the number of repetitions is 4 in FIG. 3, the number of repetitions is by no means limited to this. As shown in FIG. 3, when the number of repetitions is 4, an MTC terminal receives an MPDCCH, which contains information regarding PUSCH allocation (uplink grant), over four subframes, and combines these. In four subframes that come 4 ms or more after the last subframe in which the MPDCCH was received, the MTC terminal transmits a PUSCH in the narrow band indicated by uplink grant.

The radio base station transmits transmission acknowledgment information (HARQ-ACK) in response to the PUSCH, in an MPDCCH, over four subframes from the subframe (#k+4) that is 4 ms after the last subframe (#k) in which the PUSCH was received. In four subframes that come 4 ms or more after the last subframe in which the transmission acknowledgment information was received, the MTC terminal retransmits the PUSCH based on the transmission acknowledgment information.

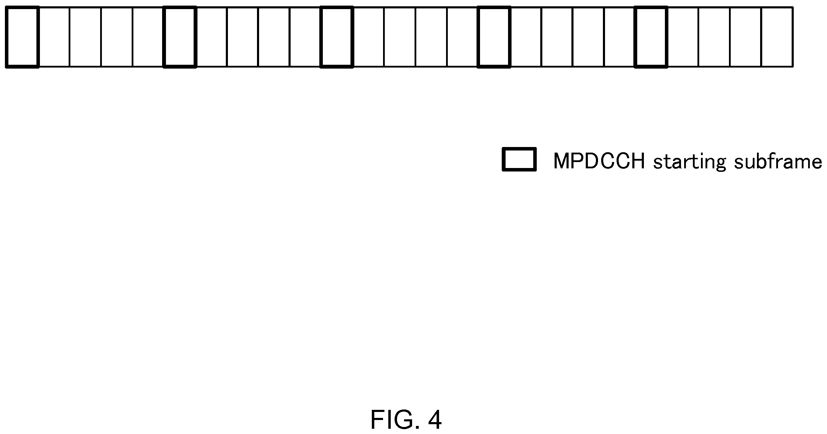

Also, in MTC, a study is in progress to limit the subframes where the transmission of an MPDCCH can be started (hereinafter referred to as "starting subframes"). FIG. 4 is a diagram to show examples of MPDCCH starting subframes.

As shown in FIG. 4, MPDCCH starting subframes are provided in a predetermined cycle (in FIG. 4, in a 5-ms cycle). Note that MPDCCH starting subframes may be provided when an MPDCCH is transmitted in repetitions and/or when an MPDCCH is not transmitted in repetitions (transmitted in a single subframe).

When repetitious transmission is applied, the cycle of starting subframes may be determined based on the number of repetitions. For example, when the number of repetitions is 5, starting subframe may be provided in a 5-ms cycle. Alternatively, the cycle of starting subframes may be reported via higher layer signaling (for example, RRC (Radio Resource Control) signaling). Alternatively, the cycle of starting subframes may be configured in advance.

Note that an MPDCCH may be transmitted in all PRBs (for example, 6 PRBs) that constitute a narrow band in a system band, or may be transmitted in part of the PRBs (for example, 3 PRBs). Information about the allocation of an MPDCCH may be reported via higher layer signaling (for example, RRC signaling, a broadcast signal, etc.) or may be configured in MTC terminals in advance.

However, when, as shown in FIG. 4, MPDCCH starting subframes are configured, there is a threat that, if existing feedback techniques are used, MTC terminals may not be able to receive transmission acknowledgment information in response to a PUSCH adequately.

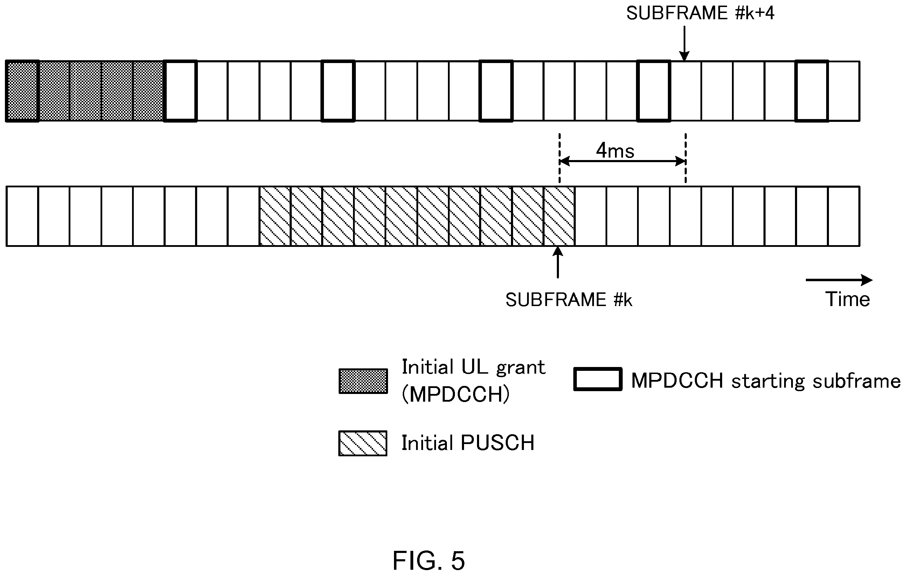

FIG. 5 is a diagram to show an example of a case where transmission acknowledgment information in response to a PUSCH cannot be received. A case in which repetitious transmission is used will be described with reference to FIG. 5. Note that, although the number of repetitions for an MPDCCH is 5 and the number of repetitions for a PUSCH is 10 in FIG. 5, these numbers of repetitions are by no means limiting. Furthermore, the cycle of starting subframes is not limited to 5 ms either.

Referring to FIG. 5, a radio base station tries to start transmitting transmission acknowledgment information (HARQ-ACK) in response to a PUSCH in the subframe (#k+4) that comes 4 ms after the last subframe (#k) in which the PUSCH was received. However, subframe #k+4 is not an MPDCCH starting subframe. Consequently, the radio base station is unable to transmit the transmission acknowledgment information in an MPDCCH, and an MTC terminal is unable to receive the transmission acknowledgment information.

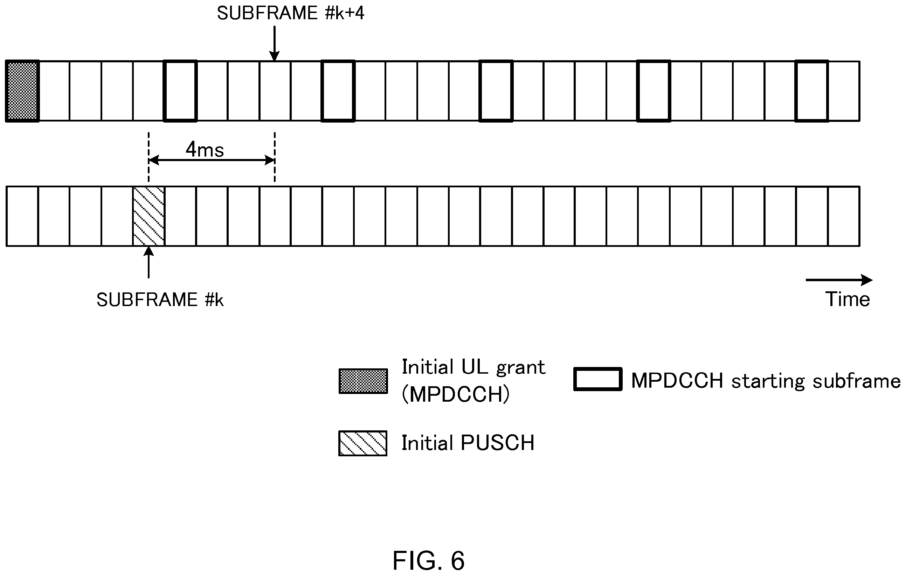

FIG. 6 is a diagram to show another example of a case where transmission acknowledgment information in response to a PUSCH cannot be received. A case in which repetitious transmission is not used will be described with reference to FIG. 6. In a subframe (#k) that comes 4 ms or more after a subframe in which an MPDCCH is received, an MTC terminal transmits a PUSCH in a narrow band that is indicated by the uplink grant.

A radio base station tries to transmit transmission acknowledgment information in response to the PUSCH in the subframe (#k+4) that comes 4 ms after the subframe (#k). However, since subframe #k+4 is not an MPDCCH starting subframe, Consequently, the radio base station is unable to transmit the transmission acknowledgment information in an MPDCCH, and the MTC terminal is unable to receive the transmission acknowledgment information.

As described above, when trying to apply the technique of feeding back transmission acknowledgment information in response to the PUSCH to existing user terminals (for example, LTE terminals) to MTC terminals, there is a threat that MTC terminals are unable to receive transmission acknowledgment information in response to uplink data signals (for example, the PUSCH) adequately.

So, the present inventors have come up with the idea of enabling MTC terminals to receive transmission acknowledgment information in response to uplink data signals adequately by adjusting the feedback timing of transmission acknowledgment information in response to uplink data signals, and thereupon arrived at the present invention.

To be more specific, according to one aspect of the present invention, an MTC terminal (a user terminal that is limited to using partial frequency blocks in a system band as bands for its use) receives a downlink control signal (MPDCCH) and transmits an uplink data signal (PUSCH) in starting subframes, which are provided in a predetermined cycle. If the subframe that comes a predetermined period of time after the subframe in which the PUSCH is transmitted is not a starting subframe of a predetermined cycle, the MTC terminal receives an MPDCCH that contains transmission acknowledgment information in response to the PUSCH in the above subframe that comes a predetermined period of time later, or in the first starting subframe after the subframe that comes a predetermined period of time later.

Now, the radio communication method according to an embodiment of the present invention will be described. Note that, although, in the following description, a narrow band (frequency block) in a system band will be illustrated to be 1.4 MHz and formed with 6 resource blocks (PRBs), this is by no means limiting.

Also, although cases will be described below in which downlink control signals (MPDCCH), downlink data signals (PDSCH) and other signals are transmitted in repetitions in a narrow band in a system band, but this is by no means limiting. The radio communication method according to the present embodiment is equally applicable to cases in which signals are transmitted in a single subframe, without repetitious transmission.

### (First Example)

According to the first example, an MTC terminal receives an MPDCCH and transmits a PUSCH in a starting subframe, which is provided in a predetermined cycle. If the subframe that comes a predetermined period of time after the subframe in which the PUSCH is transmitted is not a starting subframe of a predetermined cycle, the MTC terminal receives an MPDCCH, which contains transmission acknowledgment information in response to the PUSCH, in the above subframe that comes a predetermined of time later (#k+4).

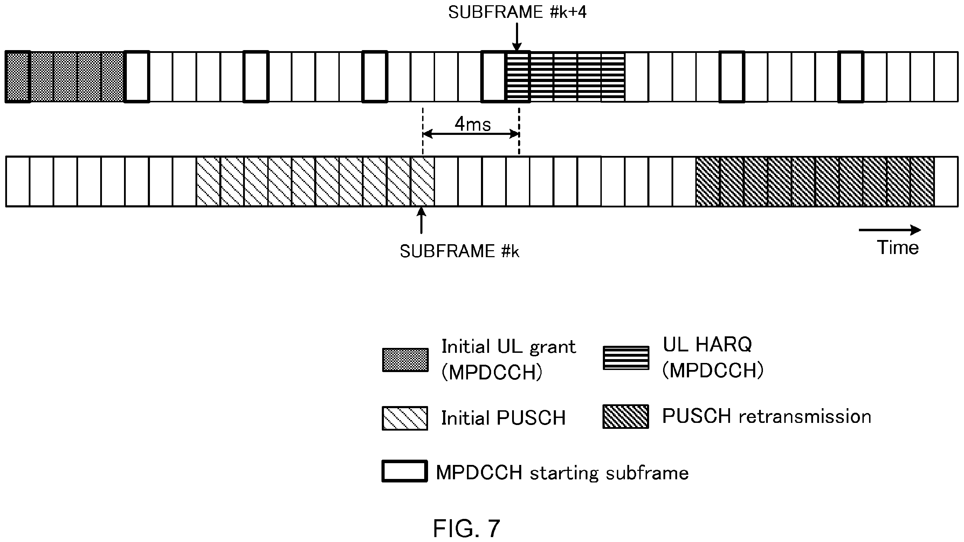

FIG. 7 is a diagram to show an example of feedback of transmission acknowledgment information according to the first example. Note that, although FIG. 7 assumes that the number of repetitions for an MPDCCH is 5 and the cycle of starting subframes (MPDCCH starting subframes) is 5 ms, this is by no means limiting. Also, the number of repetitions for a PUSCH is not limited to 10 either.

As shown in FIG. 7, an MTC terminal receives an MPDCCH, which contains an uplink grant, over 5 subframes from a starting subframe of a predetermined cycle, and combines these. The MTC terminal transmits a PUSCH, in the narrow bands indicated by the uplink grant, over 10 subframes that come 4 ms or more after the last subframe in which the MPDCCH was received.

Here, the cycle of starting subframes may be determined based on the number of times the MPDCCH is repeated. Alternatively, the cycle of starting subframes may be reported from the radio base station to the MTC terminal in higher layer signaling.

As shown in FIG. 7, when an MTC terminal transmits a PUSCH in repetitions over a plurality of subframes, the MTC terminal receives an MPDCCH, which contains transmission acknowledgment information, in repetitions, over a predetermined number (for example, 5) of subframes from the subframe (#k+4) that comes a predetermined period of time (for example, 4 ms) after the last subframe (#k) in which the PUSCH is transmitted.

In FIG. 7, the subframe (#k+4) that comes a predetermined period of time (for example, 4 ms) after the last subframe (#k) in which the PUSCH is transmitted is not a starting subframe of a predetermined cycle. Consequently, the radio base station does not transmit an MPDCCH that contains a downlink grant in this subframe (#k+4) that comes a predetermined period of time later, but transmits an MPDCCH that contains transmission acknowledgment information. Note that the radio base station may transmit an MPDCCH that contains transmission acknowledgment information and an uplink grant in the above subframe that comes a predetermined period of time later.

Although the MTC terminal basically receives an MPDCCH from a starting subframe of a predetermined cycle, when an MPDCCH contains transmission acknowledgment information, the MTC terminal may receive this from the subframe (#k+4) that comes a predetermined period of time after the last subframe (#k) in which the PUSCH is transmitted. Note that the MTC terminal may receive an MPDCCH that contains transmission acknowledgment information and an uplink grant in the above subframe (#k+4) that comes a predetermined period of time later. The MTC terminal may retransmit the PUSCH, based on the transmission acknowledgment information, in the narrow band specified by the uplink grant.

Note that, referring to FIG. 7, when the subframe (#k+4) that comes a predetermined period of time (for example, 4 ms) after the last subframe (#k) in which the PUSCH is transmitted is a starting subframe of a predetermined cycle, the radio base station may transmit an MPDCCH to contain transmission acknowledgment information in this starting subframe. Accordingly, the MTC terminal may receive the MPDCCH to contain transmission acknowledgment information in this starting subframe.

According to the first example, even when the subframe (#k+4) that comes a predetermined period of time after the last subframe (#k) in which a PUSCH is transmitted is not a starting subframe of a predetermined cycle, an MPDCCH that contains transmission acknowledgment information in response to the PUSCH is transmitted in a predetermined number of subframes from or after the above subframe (#k+4) that comes a predetermined period of time later. Consequently, an MTC terminal can adequately receive the transmission acknowledgment information in response to the PUSCH.

According to the present invention, when the subframe that comes a predetermined period of time after a subframe in which a PUSCH is transmitted is not a starting subframe of a predetermined cycle, the MTC terminal receives an MPDCCH that contains transmission acknowledgment information in response to the PUSCH in the first starting subframe after the above subframe (#k+4) that comes a predetermined period of time later. Differences from the first example will be primarily described below.

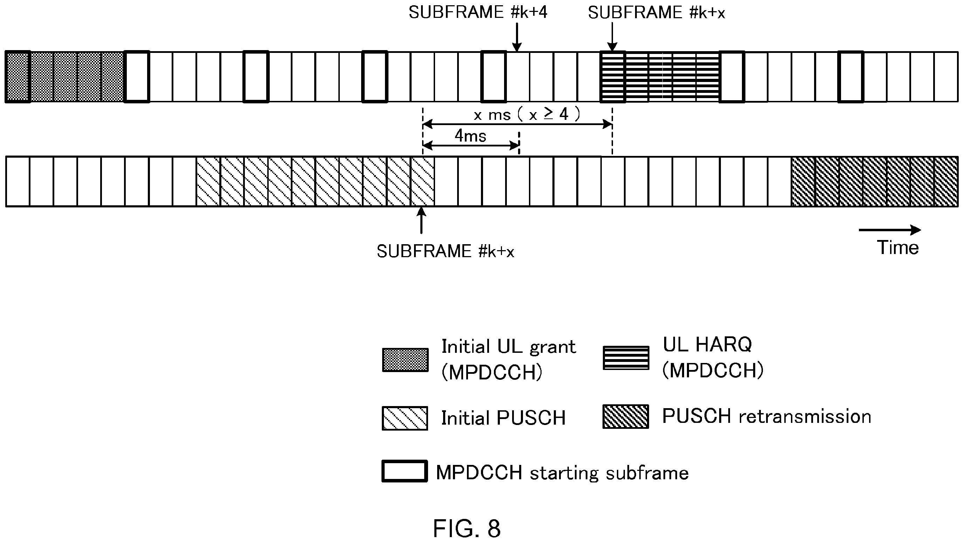

FIG. 8 is a diagram to show feedback of transmission acknowledgment information. Note that, although FIG. 8 assumes that the number of repetitions for an MPDCCH is 5 and the cycle of starting subframes (MPDCCH starting subframes) is 5 ms, this is by no means limiting. Also, the number of repetitions for a PUSCH is not limited to 10 either.

As shown in FIG. 8, when an MTC terminal transmits a PUSCH in repetitions over a plurality of subframes, the MTC terminal receives an MPDCCH, which contains transmission acknowledgment information, in repetitions, over a predetermined number (for example, 5) of subframes from the first starting subframe after the subframe (#k+4) that comes a predetermined period of time (for example, 4 ms) after the last subframe (#k) in which the PUSCH is transmitted.

In FIG. 8, the subframe (#k+4) that comes a predetermined period of time (for example, 4 ms) after the last subframe (#k) in which the PUSCH is transmitted is not a starting subframe of a predetermined cycle. Consequently, the radio base station transmits an MPDCCH that contains transmission acknowledgment information in the first starting subframe (#k+x (x ≧ 4)) after the above subframe (#k+4) that comes a predetermined period of time later. Note that the radio base station may transmit an MPDCCH that contains transmission acknowledgment information and an uplink grant in the above first starting subframe.

The MTC terminal receives the MPDCCH that contains transmission acknowledgment information from the first starting subframe (#k+x (x ≧ 4)) after the above subframe (#k+4) that comes a predetermined period of time later. Note that the MTC terminal may receive an MPDCCH that contains transmission acknowledgment information and an uplink grant in this first starting subframe. The MTC terminal retransmits the PUSCH, based on the transmission acknowledgment information, in the narrow band specified by the uplink grant.

Note that, referring to FIG. 8, when the subframe (#k+4) that comes a predetermined period of time (for example, 4 ms) after the last subframe (#k) in which the PUSCH is transmitted is a starting subframe of a predetermined cycle, the radio base station transmits an MPDCCH to contain transmission acknowledgment information in this starting subframe. Accordingly, the MTC terminal receives the MPDCCH to contain transmission acknowledgment information in this starting subframe.

According to the invention, even when the subframe (#k+4) that comes a predetermined period of time after the last subframe (#k) in which a PUSCH is transmitted is not a starting subframe of a predetermined cycle, an MPDCCH that contains transmission acknowledgment information in response to the PUSCH is transmitted in the first starting subframe (#k+x(x ≧ 4)) after the above subframe (#k+4) that comes a predetermined period of time later. Consequently, an MTC terminal can adequately receive the transmission acknowledgment information in response to the PUSCH.

### (Radio Communication System)

Now, the structure of the radio communication system according to an embodiment of the present invention will be described below. In this radio communication system, the radio communication methods according to the above-described embodiments of the present invention are employed. Note that the radio communication methods of the above-described embodiments may be applied individually or may be applied in combination. Here, although MTC terminals will be shown as examples of user terminals that are limited to using narrow bands as bands for use, the present invention is by no means limited to MTC terminals.

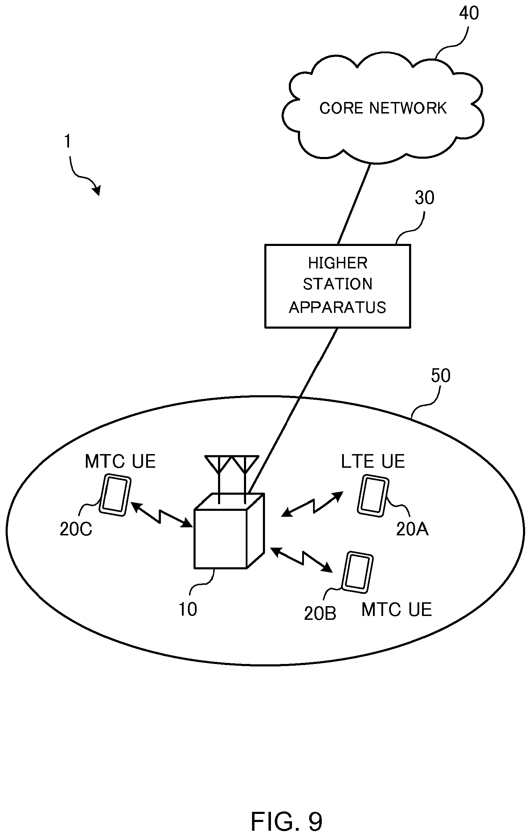

FIG. 9 is a diagram to show a schematic structure of the radio communication system according to an embodiment of the present invention. The radio communication system 1 shown in FIG. 6 is an example of employing an LTE system in the network domain of a machine-type communication (MTC) system. The radio communication system 1 can adopt carrier aggregation (CA) and/or dual connectivity (DC) to group a plurality of fundamental frequency blocks (component carriers) into one, where the LTE system band constitutes one unit. Also, although, in this LTE system, the system band is configured to maximum 20 MHz in both the downlink and the uplink, this configuration is by no means limiting. Note that the radio communication system 1 may be referred to as "SUPER 3G," "LTE-A" (LTE-Advanced), "IMT-Advanced," "4G," "5G," "FRA" (Future Radio Access) and so on.

The radio communication system 1 is comprised of a radio base station 10 and a plurality of user terminals 20A, 20B and 20C that are connected with the radio base station 10. The radio base station 10 is connected with a higher station apparatus 30, and connected with a core network 40 via the higher station apparatus 30. Note that the higher station apparatus 30 may be, for example, an access gateway apparatus, a radio network controller (RNC), a mobility management entity (MME) and so on, but is by no means limited to these.

A plurality of user terminal 20A, 20B and 20C can communicate with the radio base station 10 in a cell 50. For example, the user terminal 20A is a user terminal that supports LTE (up to Rel-10) or LTE-Advanced (including Rel-10 and later versions) (hereinafter referred to as an "LTE terminal"), and the other user terminals 20B and 20C are MTC terminals that serve as communication devices in MTC systems, and are limited to using narrow bands (frequency blocks) in a system band as bands for their use. Hereinafter the user terminals 20A, 20B and 20C will be simply referred to as "user terminals 20," unless specified otherwise.

Note that the MTC terminals 20B and 20C are terminals that support various communication schemes including LTE and LTE-A, and are by no means limited to stationary communication terminals such electric meters, gas meters, vending machines and so on, and can be mobile communication terminals such as vehicles. Furthermore, the user terminals 20 may communicate with other user terminals 20 directly, or communicate with other user terminals 20 via the radio base station 10.

In the radio communication system 1, as radio access schemes, OFDMA (Orthogonal Frequency Division Multiple Access) is applied to the downlink, and SC-FDMA (Single-Carrier Frequency Division Multiple Access) is applied to the uplink. OFDMA is a multi-carrier communication scheme to perform communication by dividing a frequency band into a plurality of narrow frequency bands (subcarriers) and mapping data to each subcarrier. SC-FDMA is a single-carrier communication scheme to mitigate interference between terminals by dividing the system band into bands formed with one or continuous resource blocks per terminal, and allowing a plurality of terminals to use mutually different bands. Note that the uplink and downlink radio access schemes are by no means limited to the combination of these.

In the radio communication system 1, a downlink shared channel (PDSCH: Physical Downlink Shared CHannel), which is used by each user terminal 20 on a shared basis, a broadcast channel (PBCH: Physical Broadcast CHannel), downlink L1/L2 control channels and so on are used as downlink channels. User data, higher layer control information and predetermined SIBs (System Information Blocks) are communicated in the PDSCH. Also, the MIB (Master Information Block) is communicated in the PBCH.

The downlink L1/L2 control channels include a PDCCH (Physical Downlink Control CHannel), an EPDCCH (Enhanced Physical Downlink Control CHannel), a PCFICH (Physical Control Format Indicator CHannel), a PHICH (Physical Hybrid-ARQ Indicator CHannel) and so on. Downlink control information (DCI) including PDSCH and PUSCH scheduling information is communicated by the PDCCH. The number of OFDM symbols to use for the PDCCH is communicated by the PCFICH. HARQ delivery acknowledgement signals (ACKs/NACKs) in response to the PUSCH are communicated by the PHICH. The EPDCCH/MPDCCH is frequency-division-multiplexed with the PDSCH (downlink shared data channel) and used to communicate DCI and so on, like the PDCCH. The MPDCCH is transmitted in narrow bands (frequency blocks) in a system band.

In the radio communication system 1, an uplink shared channel (PUSCH: Physical Uplink Shared CHannel), which is used by each user terminal 20 on a shared basis, an uplink control channel (PUCCH: Physical Uplink Control CHannel), a random access channel (PRACH: Physical Random Access CHannel) and so on are used as uplink channels. User data and higher layer control information are communicated by the PUSCH. Also, downlink radio quality information (CQI: Channel Quality Indicator), delivery acknowledgement signals and so on are communicated by the PUCCH. By means of the PRACH, random access preambles (RA preambles) for establishing connections with cells are communicated.

### <Radio base station>

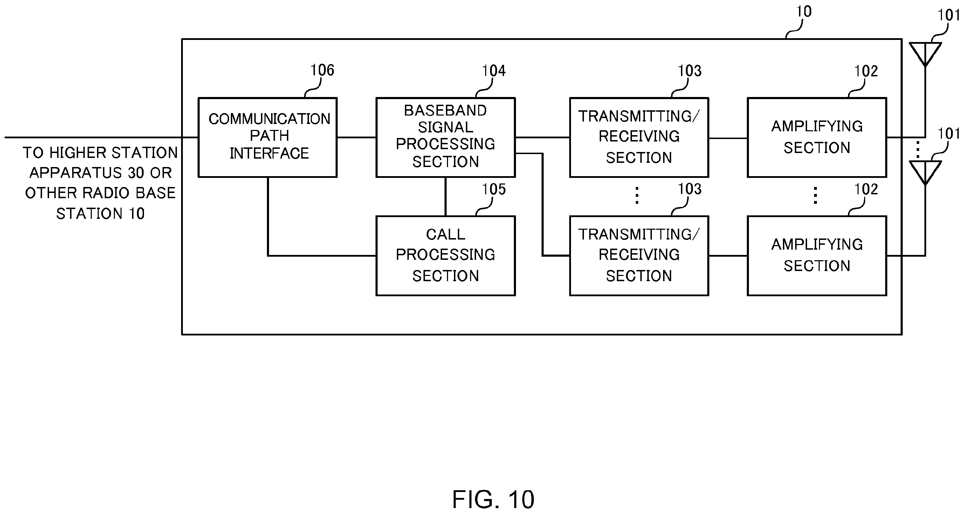

FIG. 10 is a diagram to show an example of an overall structure of a radio base station according to one embodiment of the present invention. A radio base station 10 has a plurality of transmitting/receiving antennas 101, amplifying sections 102, transmitting/receiving sections 103, a baseband signal processing section 104, a call processing section 105 and a communication path interface 106. Note that the transmitting/receiving sections 103 are comprised of transmitting sections and receiving sections.

User data to be transmitted from the radio base station 10 to a user terminal 20 on the downlink is input from the higher station apparatus 30 to the baseband signal processing section 104, via the communication path interface 106.

In the baseband signal processing section 104, the user data is subjected to a PDCP (Packet Data Convergence Protocol) layer process, user data division and coupling, RLC (Radio Link Control) layer transmission processes such as an RLC retransmission control transmission process, MAC (Medium Access Control) retransmission control (for example, an HARQ (Hybrid Automatic Repeat reQuest) transmission process), scheduling, transport format selection, channel coding, an inverse fast Fourier transform (IFFT) process and a precoding process, and the result is forwarded to each transmitting/receiving section 103. Furthermore, downlink control signals are also subjected to transmission processes such as channel coding and an inverse fast Fourier transform, and forwarded to each transmitting/receiving section 103.

The transmitting/receiving sections 103 receive downlink signals, and, furthermore, transmit uplink signals. The downlink signals include downlink control signals (for example, the PDCCH/EPDCCH/MPDCCH), downlink data signals (for example, the PDSCH), downlink reference signals (for example, CSI-RSs (Channel State Information-Reference Signals), CRSs (Cell-specific Reference Signals)), higher layer control signals, and so on. The uplink signals include uplink control signals (for example, the PUCCH), uplink data signals (for example, the PUSCH), uplink reference signals (for example, SRSs (Sounding Reference Signals), DM-RSs (DeModulation-Reference Signals)), higher layer control signals, and so on.

To be more specific, each transmitting/receiving section 103 converts baseband signals that are pre-coded and output from the baseband signal processing section 104 on a per antenna basis, into a radio frequency band. The radio frequency signals having been subjected to frequency conversion in the transmitting/receiving sections 103 are amplified in the amplifying sections 102, and transmitted from the transmitting/receiving antennas 101. The transmitting/receiving sections 103 can transmit and/or receive various signals in a narrow band (frequency block) (for example, 1.4 MHz) that is more limited than a system band (for example, one component carrier).

For the transmitting/receiving sections 103, transmitters/receivers, transmitting/receiving circuits or transmitting/receiving devices that can be described based on common understanding of the technical field to which the present invention pertains can be used.

Meanwhile, as for uplink signals, radio frequency signals that are received in the transmitting/receiving antennas 101 are each amplified in the amplifying sections 102. Each transmitting/receiving section 103 receives uplink signals amplified in the amplifying sections 102. The received signals are converted into the baseband signal through frequency conversion in the transmitting/receiving sections 103 and output to the baseband signal processing section 104.

In the baseband signal processing section 104, user data that is included in the uplink signals that are input is subjected to a fast Fourier transform (FFT) process, an inverse discrete Fourier transform (IDFT) process, error correction decoding, a MAC retransmission control receiving process, and RLC layer and PDCP layer receiving processes, and forwarded to the higher station apparatus 30 via the communication path interface 106. The call processing section 105 performs call processing such as setting up and releasing communication channels, manages the state of the radio base station 10 and manages the radio resources.

The communication path interface section 106 transmits and receives signals to and from the higher station apparatus 30 via a predetermined interface. Also, the communication path interface 106 may transmit and/or receive signals (backhaul signaling) with other radio base stations 10 via an inter-base station interface (for example, an interface in compliance with the CPRI (Common Public Radio Interface), such as optical fiber, the X2 interface, etc.).

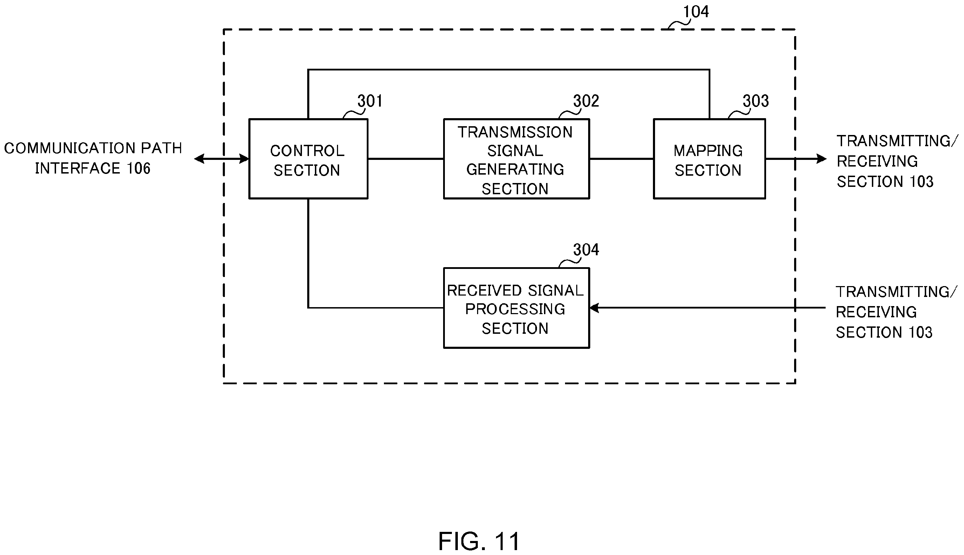

FIG. 11 is a diagram to show an example of a functional structure of a radio base station according to the present embodiment. Note that, although FIG. 11 primarily shows functional blocks that pertain to characteristic parts of the present embodiment, the radio base station 10 has other functional blocks that are necessary for radio communication as well. As shown in FIG. 8, the baseband signal processing section 104 has control section 301, a transmission signal generating section 302, a mapping section 303 and a received signal processing section 304.

The control section 301 controls the scheduling (for example, resource allocation) of downlink data signals (PDSCH), downlink control signals (at least one of the PDCCH, the EPDCCH and the MPDCCH). Also, the control section 301 controls the scheduling of system information, synchronization signals, and downlink reference signals (CRSs, CSI-RSs, DM-RSs and so on). Furthermore, the control section 301 controls the scheduling of uplink reference signals, uplink data signals (PUSCH), uplink control signals (PUCCH), random access preambles that are transmitted in the PRACH, and so on.

The control section 301 controls the transmission signal generating section 302 and the mapping section 303 to allocate various signals to narrow bands and transmit these to the user terminals 20. For example, the control section 301 controls downlink system information (the MIB, SIBs, etc.), downlink control signals (MPDCCH), downlink data signals (PDSCH) and so on to be transmitted in narrow bands.

Also, the control section 301 controls a downlink control signal (MPDCCH) to be transmitted in subframes of a predetermined cycle. Furthermore, the control section 301 may control the MPDCCH to be transmitted in repetitions over a predetermined number of subframes from a starting subframe of a predetermined cycle. The number of times to repeat the MPDCCH may be reported to the user terminals 20 by using higher layer signaling (for example, RRC signaling), system information and so on.

Note that the cycle of starting subframes may be determined based on the number of times the downlink control signal (MPDCCH) is repeated. Alternatively, the cycle of starting subframes may be reported to the user terminals 20 by using higher layer signaling, system information and so on.

Also, the control section 301 may exert control so that a downlink control signal (MPDCCH) to contain transmission acknowledgment information (HARQ-ACK) in response to an uplink data signal (PUSCH) is generated and transmitted. To be more specific, when the subframe that comes a predetermined period of time (for example, 4 ms) after the subframe in which the uplink data signal is received is not a starting subframe of a predetermined cycle, the control section 301 controls the above downlink control signal (MPDCCH) containing transmission acknowledgment information to be transmitted in this subframe that comes a predetermined period of time later, or in the first starting subframe after the subframe that comes a predetermined period of time later.

Also, when an uplink data signal (PUSCH) is received in repetitions over a plurality of subframes, the control section 301 may control the above downlink control signal (MPDCCH) containing transmission acknowledgment information to be transmitted in the subframe that comes a predetermined period of time after the last subframe in which the uplink data signal is transmitted (FIG. 8), or in the first starting subframe after the subframe that comes a predetermined period of time later.

Furthermore, the control section 301 may control the downlink control signal (MPDCCH) to be transmitted in repetitions over a predetermined number of subframes from the above subframe that comes a predetermined period of time later, or from the first starting subframe after the subframe that comes a predetermined period of time later.

Furthermore, the control section 301 may control the downlink control signal (MPDCCH) to be transmitted in a narrow band (frequency block) in a system band. Note that this narrow band may be configured by higher layer signaling and reported to the user terminals 20, or may be configured in advance. Furthermore, the above narrow band may be variable (FIG. 2B).

Note that, when the subframe that comes a predetermined period of time (for example, 4 ms) after a subframe in which an uplink data signal is received is a starting subframe of a predetermined cycle, the control section 301 may control the above downlink control signal (MPDCCH) containing transmission acknowledgment information to be transmitted in this starting subframe.

For the control section 301, a controller, a control circuit or a control device that can be described based on common understanding of the technical field to which the present invention pertains can be used.

The transmission signal generating section 302 generates downlink signals based on commands from the control section 301 and outputs these signals to the mapping section 303. For example, the transmission signal generating section 302 generates downlink grants (downlink assignments), which report downlink data signal allocation information, and uplink grants, which report uplink data signal allocation information, based on commands from the control section 301.

Also, the transmission signal generating section 302 generates a downlink control signal (MPDCCH) that contains transmission acknowledgment information in response to an uplink data signal (PUSCH) based on a command from the control section 301.

For the transmission signal generating section 302, a signal generator, a signal generating circuit or a signal generating device that can be described based on common understanding of the technical field to which the present invention pertains can be used.

The mapping section 303 maps the downlink signals generated in the transmission signal generating section 302 to predetermined narrow band radio resources (for example, maximum 6 resource blocks) based on commands from the control section 301, and outputs these to the transmitting/receiving sections 103. For the mapping section 303, mapper, a mapping circuit or a mapping device that can be described based on common understanding of the technical field to which the present invention pertains can be used.

The received signal processing section 304 performs receiving processes (for example, demapping, demodulation, decoding and so on) of received signals that are input from the transmitting/receiving sections 103. Here, the received signals include, for example, uplink signals transmitted from user terminal 20 (uplink data signals (PUSCH), uplink control signals (PUCCH), uplink reference signals (SRSs, DMRSs, etc.), higher layer control signals, etc.). The received signal processing section 304 outputs the received information to the control section 301.

Also, by using the received signals, the received signal processing section 304 may measure the received power (for example, RSRP (Reference Signal Received Power)), the received quality (for example, RSRQ (Reference Signal Received Quality)), channel states and so on. The measurement results may be output to the control section 301.

The receiving process section 304 can be constituted by a signal processor, a signal processing circuit or a signal processing device, and a measurer, a measurement circuit or a measurement device that can be described based on common understanding of the technical field to which the present invention pertains.

### <User terminal>

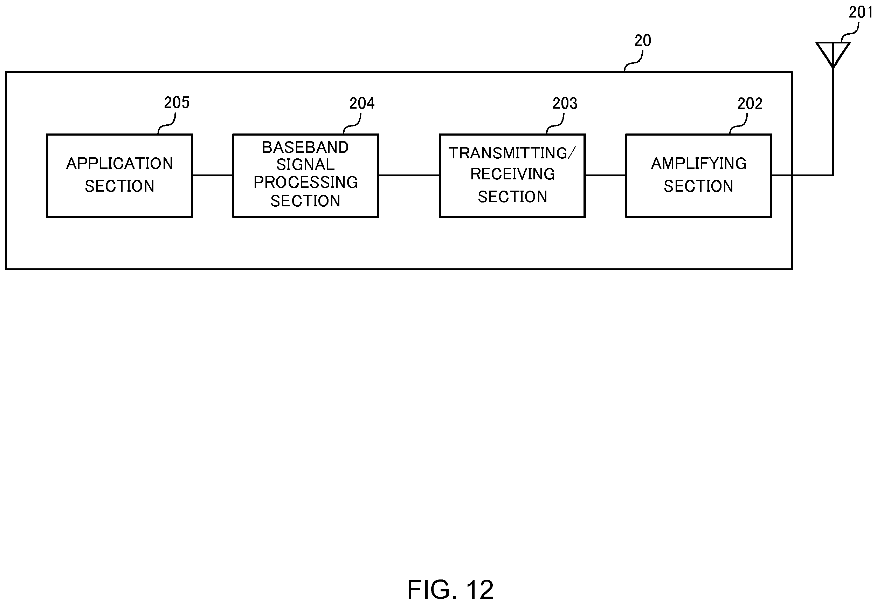

FIG. 12 is a diagram to show an example of an overall structure of a user terminal according to the present embodiment. Note that, although not described in detail herein, normal LTE terminals may operate to act as MTC terminals. A user terminal 20 has a transmitting/receiving antenna 201, an amplifying section 202, a transmitting/receiving section 203, a baseband signal processing section 204 and an application section 205. Note that, the transmitting/receiving section 203 is comprised of a transmitting section and a receiving section. Also, the user terminal 20 may have a plurality of transmitting/receiving antennas 201, amplifying sections 202, transmitting/receiving sections 203 and/or others.

A radio frequency signal that is received in the transmitting/receiving antenna 201 is amplified in the amplifying section 202. The transmitting/receiving section 203 receives downlink signals amplified in the amplifying section 202 (including downlink control signals (PDCCH/EPDCCH/MPDCCH), downlink data signals (PDSCH), downlink reference signals (CSI-RSs, CRSs, etc.), higher layer control signals, and so on. The received signals are subjected to frequency conversion and converted into the baseband signal in the transmitting/receiving section 203, and output to the baseband signal processing section 204.

Also, the transmitting/receiving section 203 may receive information related to starting subframes of a predetermined cycle (MPDCCH starting subframes) from higher layer signaling or system information. The starting subframe-related information may include at least one of, for example, the cycle of starting subframes, the offset with respect to the beginning of a radio frame and the number of repetitions.

Furthermore, the transmitting/receiving section 203 transmits uplink signals (including uplink control signals (PUCCH), uplink data signals (PUSCH), uplink reference signals (DM-RSs, SRSs, etc.) and so on) that are output from the baseband signal processing section 204. For the transmitting/receiving sections 203, transmitters/receivers, transmitting/receiving circuits or transmitting/receiving devices that can be described based on common understanding of the technical field to which the present invention pertains can be used.

The baseband signal processing section 204 performs receiving processes for the baseband signal that is input, including an FFT process, error correction decoding, a retransmission control receiving process and so on. Downlink user data is forwarded to the application section 205. The application section 205 performs processes related to higher layers above the physical layer and the MAC layer, and so on. Furthermore, in the downlink data, broadcast information is also forwarded to the application section 205.

Meanwhile, uplink user data is input from the application section 205 to the baseband signal processing section 204. The baseband signal processing section 204 performs a retransmission control transmission process (for example, an HARQ transmission process), channel coding, pre-coding, a discrete Fourier transform (DFT) process, an IFFT process and so on, and the result is forwarded to the transmitting/receiving section 203. The baseband signal that is output from the baseband signal processing section 204 is converted into a radio frequency band in the transmitting/receiving section 203. The radio frequency signal that is subjected to frequency conversion in the transmitting/receiving section 203 is amplified in the amplifying section 202, and transmitted from the transmitting/receiving antenna 201.

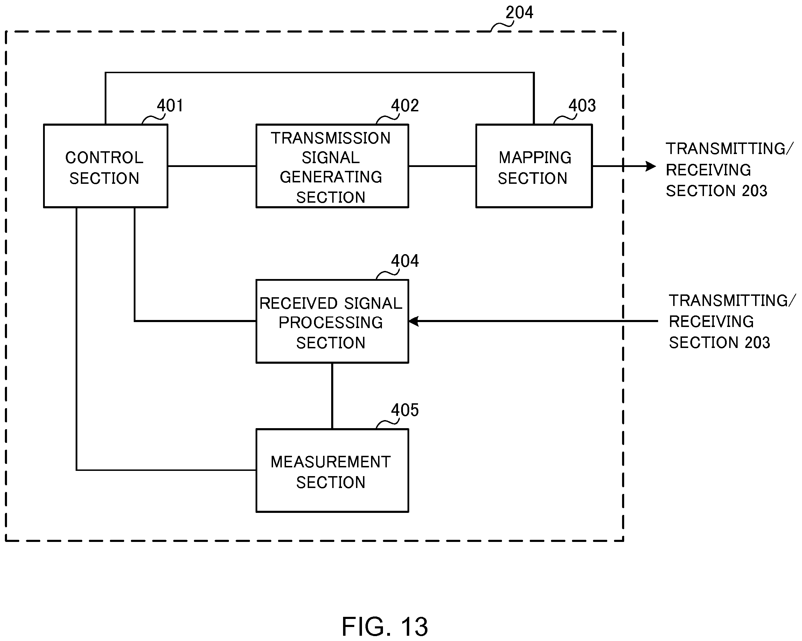

FIG. 13 is a diagram to show an example of a functional structure of a user terminal according to the present embodiment. Note that, although FIG. 13 primarily shows functional blocks that pertain to characteristic parts of the present embodiment, the user terminal 20 has other functional blocks that are necessary for radio communication as well. As shown in FIG. 13, the baseband signal processing section 204 provided in the user terminal 20 has a control section 401, a transmission signal generating section 402, a mapping section 403, a received signal processing section 404 and a measurement section 405.

The control section 401 controls the transmission signal generating section 402 and the mapping section 403. The control section 401 acquires the downlink control signals (PDCCH/EPDCCH/MPDCCH), downlink data signals (PDSCH) and higher layer control signals, transmitted from the radio base station 10, from the received signal processing section 404. The control section 401 controls the generation of uplink control signals (PUCCH) and uplink data signals (PUSCH) based on the downlink control signals, the results of deciding whether or not retransmission control is necessary for the downlink data signals, and so on.

Also, the control section 301 controls a downlink control signal (MPDCCH) to be transmitted in subframes of a predetermined cycle. Furthermore, the control section 401 may control this downlink control to be received in repetitions over a predetermined number of subframes from a starting subframe of a predetermined cycle. The number of times the MPDCCH is repeated may be reported from the radio base station 10 by using higher layer signaling (for example, RRC signaling), a broadcast signal and so on.

Note that the control section 401 may determine the cycle of starting subframes based on the number of times the downlink control signal (MPDCCH) is repeated. Alternatively, the cycle of starting subframes may be reported from the radio base station 10.

To be more specific, when the subframe that comes a predetermined period of time (for example, 4 ms) after a subframe in which an uplink data signal (PUSCH) is transmitted is not a starting subframe of a predetermined cycle, the control section 401 controls a downlink control signal (MPDCCH) that contains transmission acknowledgment information in response to the uplink data signal to be received in this subframe that comes a predetermined period of time later, or in the first starting subframe after the subframe that comes a predetermined period of time later.

Also, when controlling the uplink data signal (PUSCH) to be transmitted in repetitions over a plurality of subframes, the control section 401 may control the above downlink control signal (MPDCCH) containing transmission acknowledgment information to be received in the subframe that comes a predetermined period of time after the last subframe in which the uplink data signal is transmitted (see FIG. 7), or in the first starting subframe after the subframe that comes a predetermined period of time later (see FIG. 8).

Furthermore, the control section 401 may control the downlink control signal (MPDCCH) to be received in repetitions over a predetermined number of subframes from the above subframe that comes a predetermined period of time later, or from the first starting subframe after the subframe that comes a predetermined period of time later. The number of times the downlink control signal is repeated may be reported from the radio base station 10 by higher layer signaling, or may be configured in advance.

Also, the control section 401 may exert control so that the uplink data signal (PUSCH) is retransmitted, based on the above transmission acknowledgment information, in a frequency block that is specified by the uplink grant included in the above downlink control signal (MPDCCH).

Note that, when the subframe that comes a predetermined period of time (for example, 4 ms) after a subframe in which an uplink data signal is received is a starting subframe of a predetermined cycle, the control section 401 may control the above downlink control signal (MPDCCH) to contain transmission acknowledgment information to be transmitted in this starting subframe.

For the control section 401, a controller, a control circuit or a control device that can be described based on common understanding of the technical field to which the present invention pertains can be used. Note that, the control section 401, combined with the measurement section 405, may constitute the measurement section of the present invention.

The transmission signal generating section 402 generates uplink signals based on commands from the control section 401, and outputs these signals to the mapping section 403. For example, the transmission signal generating section 402 generates an uplink control signal (PUCCH), which includes uplink control information (UCI), based on a command from the control section 401. The UCI may include at least one of transmission acknowledgment information (HARQ-ACK), channel state information (CSI) and a scheduling request (SR).

Also, the transmission signal generating section 402 generates an uplink data signal (PUSCH) based on a command from the control section 401. For example, when an uplink grant is included in a downlink control signal that is reported from the radio base station 10, the control section 401 commands the transmission signal generating section 402 to generate an uplink data signal.

For the transmission signal generating section 402, a signal generator, a signal generating circuit or a signal generating device that can be described based on common understanding of the technical field to which the present invention pertains can be used.

The mapping section 403 maps the uplink signals generated in the transmission signal generating section 402 to radio resources (maximum 6 resource blocks) based on commands from the control section 401, and outputs these to the transmitting/receiving sections 203. For the mapping section 403, mapper, a mapping circuit or a mapping device that can be described based on common understanding of the technical field to which the present invention pertains can be used.

The received signal processing section 404 performs receiving processes (for example, demapping, demodulation, decoding and so on) of received signals that are input from the transmitting/receiving sections 203. Here, the received signals include, for example, downlink signals transmitted from the radio base station 10 (downlink control signals (PDCCH/EPDCCH/MPDCCH), downlink data signals (PDSCH) and so on), higher layer control signals and so on.

The received signal processing section 404 outputs the received information to the control section 401. The received signal processing section 404 outputs, for example, broadcast information, system information, RRC signaling, DCI and so on, to the control section 401. Also, the received signal processing section 404 outputs the received signals, the signals after the receiving processes and so on to the measurement section 405.

For the received signal processing section 404, a signal processor, a signal processing circuit or a signal processing device that can be described based on common understanding of the technical field to which the present invention pertains can be used. Also, the received signal processing section 404 can constitute the receiving section according to the present invention.

The measurement section 405 measures the CSI of a narrow band (frequency block), which is frequency-hopped in a predetermined cycle, based on commands from the control section 401. The CSI includes at least one of a rank indicator (RI), a channel quality indicator (CQI) and a precoding matrix indicator (PMI). Also, the measurement section 405 may measure the received power (RSRP), the receive quality (RSRQ), and so on, by using received signals. Note that the processing results and the measurement results may be output to the control section 401.

For the received signal processing section 404, a signal processor/measurer, a signal processing/measurement circuit or a signal processing/measurement device that can be described based on common understanding of the technical field to which the present invention pertains can be used.

Note that the block diagrams that have been used to describe the above embodiments show blocks in functional units. These functional blocks (components) may be implemented in arbitrary combinations of hardware and software. Also, the means for implementing each functional block is not particularly limited. That is, each functional block may be implemented with one physically-integrated device, or may be implemented by connecting two physically-separate devices via radio or wire and using these multiple devices.

For example, part or all of the functions of the radio base station 10 and the user terminal 20 may be implemented by using hardware such as an ASIC (Application-Specific Integrated Circuit), a PLD (Programmable Logic Device), an FPGA (Field Programmable Gate Array) and so on. Also, the radio base stations 10 and user terminals 20 may be implemented with a computer device that includes a processor (CPU), a communication interface for connecting with networks, a memory and a computer-readable storage medium that holds programs. That is, the radio base stations and user terminals according to an embodiment of the present invention may function as computers that execute the processes of the radio communication method of the present invention.

Here, the processor and the memory are connected with a bus for communicating information. Also, the computer-readable recording medium is a storage medium such as, for example, a flexible disk, an opto-magnetic disk, a ROM (Read Only Memory), an EPROM (Erasable Programmable ROM), a CD-ROM (Compact Disc-ROM), a RAM (Random Access Memory), a hard disk and so on. Also, the programs may be transmitted from the network through, for example, electric communication channels. Also, the radio base stations 10 and user terminals 20 may include input devices such as input keys and output devices such as displays.

The functional structures of the radio base stations 10 and user terminals 20 may be implemented with the above-described hardware, may be implemented with software modules that are executed on the processor, or may be implemented with combinations of both. The processor controls the whole of the user terminals 20 by running an operating system. Also, the processor reads programs, software modules and data from the storage medium into the memory, and executes various types of processes.

Here, these programs have only to be programs that make a computer execute each operation that has been described with the above embodiments. For example, the control section 401 of the user terminals 20 may be stored in the memory and implemented by a control program that operates on the processor, and other functional blocks may be implemented likewise.

Also, software and commands may be transmitted and received via communication media. For example, when software is transmitted from a website, a server or other remote sources by using wired technologies such as coaxial cables, optical fiber cables, twisted-pair cables and digital subscriber lines (DSL) and/or wireless technologies such as infrared radiation, radio and microwaves, these wired technologies and/or wireless technologies are also included in the definition of communication media.

Note that the terminology used in this description and the terminology that is needed to understand this description may be replaced by other terms that convey the same or similar meanings. For example, "channels" and/or "symbols" may be replaced by "signals" (or "signaling"). Also, "signals" may be "messages." Furthermore, "component carriers" (CCs) may be referred to as "carrier frequencies," "cells" and so on.

Also, the information and parameters described in this description may be represented in absolute values or in relative values with respect to a predetermined value, or may be represented in other information formats. For example, radio resources may be specified by indices.

The information, signals and/or others described in this description may be represented by using a variety of different technologies. For example, data, instructions, commands, information, signals, bits, symbols and chips, all of which may be referenced throughout the description, may be represented by voltages, currents, electromagnetic waves, magnetic fields or particles, optical fields or photons, or any combination of these.

The examples/embodiments illustrated in this description may be used individually or in combinations, and the mode of may be switched depending on the implementation. Also, a report of predetermined information (for example, a report to the effect that "X holds") does not necessarily have to be sent explicitly, and can be sent implicitly (by, for example, not reporting this piece of information).

Reporting of information is by no means limited to the examples/embodiments described in this description, and other methods may be used as well. For example, reporting of information may be implemented by using physical layer signaling (for example, DCI (Downlink Control Information) and UCI (Uplink Control Information)), higher layer signaling (for example, RRC (Radio Resource Control) signaling, MAC (Medium Access Control) signaling, and broadcast information (MIB (Master Information Block) and SIBs (System Information Blocks))), other signals or combinations of these. Also, RRC signaling may be referred to as "RRC messages," and can be, for example, an RRC connection setup message, RRC connection reconfiguration message, and so on.

The examples/embodiments illustrated in this description may be applied to LTE (Long Term Evolution), LTE-A (LTE-Advanced), SUPER 3G, IMT-Advanced, 4G, 5G, FRA (Future Radio Access), CDMA 2000, UMB (Ultra Mobile Broadband), IEEE 802.11 (Wi-Fi), IEEE 802.16 (WiMAX), IEEE 802.20, UWB (Ultra-WideBand), Bluetooth (registered trademark), and other adequate systems, and/or next-generation systems that are enhanced based on these.

The order of processes, sequences, flowcharts and so on that have been used to describe the examples/embodiments herein may be re-ordered as long as inconsistencies do not arise. For example, although various methods have been illustrated in this description with various components of steps in exemplary orders, the specific orders that illustrated herein are by no means limiting.

Now, although the present invention has been described in detail above, it should be obvious to a person skilled in the art that the present invention is by no means limited to the embodiments described herein. Consequently, the description herein is provided only for the purpose of explaining examples, and should by no means be construed to limit the present invention in any way.

## Claims

1. A user terminal (20), in which a band to use is limited to a narrow band in a system band, the user terminal comprising:
a receiving section (203) configured to receive downlink control information which contains transmission acknowledgment information in response to an uplink data channel, via a downlink control channel that is repeatedly transmitted starting in a starting subframe of a cycle; and
a control section (204) configured
to control retransmission of the uplink data channel based on the transmission acknowledgment information,
wherein a timing for the transmission of the downlink control information is adjusted based on the starting subframe,
wherein the control section (204) is configured to control the retransmission of the uplink data channel in a narrow band specified by the downlink control information, and wherein
the cycle is determined based on the number of repetitions of the downlink control channel.

2. The user terminal (20) according to claim 1, wherein the number of repetitions is reported by using higher layer signaling.

3. The user terminal (20) according to one of claim 1 to claim 2, wherein the narrow band is comprised of six resource blocks.

4. A radio base station (10) configured to communicate with a user terminal (20) in which a band to use is limited to a narrow band in a system band, the radio base station (10) comprising:
a transmission section (103) configured to transmit downlink control information which contains transmission acknowledgment information and specifies a narrow band, in response to an uplink data channel, via a downlink control channel that is repeatedly transmitted starting in a starting subframe of a cycle;
a control section (104) configured to control transmission of the downlink control information; and
wherein the control section (104) is configured to adjust a timing for the transmission of the downlink control information based on the starting subframe, and wherein the cycle is determined based on the number of repetitions of the downlink control channel.

5. A radio communication method performed by a user terminal (20), wherein a band used by the user terminal is limited to a narrow band in a system band, the radio communication method comprising:
Receiving downlink control information containing transmission acknowledgment information in response to an uplink data channel, via a downlink control channel that is repeatedly transmitted starting in a starting subframe of a cycle; and
controlling retransmission of the uplink data channel based on the transmission acknowledgment information,
wherein a timing for the transmisison of the downlink control information is adjusted base on the starting subframe, controlling retransmission of the uplink data channel in a narrow band specified by the downlink control information, and
wherein the cycle is determined based on the number of repetitions of the downlink control channel.

## Patentansprüche

1. Nutzerendgerät (20), bei dem ein zu verwendendes Band auf ein schmales Band in einem Systemband beschränkt ist, wobei das Nutzerendgerät umfasst:
einen Empfangsabschnitt (203), der zum Empfangen von Downlink-Steuerinformationen konfiguriert ist, die Übertragungsbestätigungsinformationen enthalten, in Reaktion auf einen Uplink-Datenkanal, über einen Downlink-Steuerkanal, der wiederholt übertragen wird, beginnend in einem Start-Subframe eines Zyklus; und einen Steuerabschnitt (204), der zum Steuern der erneuten Übertragung des Uplink-Datenkanals auf der Grundlage der Übertragungsbestätigungsinformationen konfiguriert ist, wobei ein Timing für die Übertragung der Downlink-Steuerinformationen auf der Grundlage des Start-Subframes eingestellt wird, wobei der Steuerabschnitt (204) zum Steuern der erneuten Übertragung des Uplink-Datenkanals in einem schmalen Band konfiguriert ist, das durch die Downlink-Steuerinformationen spezifiziert wird, und wobei der Zyklus auf der Grundlage der Anzahl von Wiederholungen des Downlink-Steuerkanals bestimmt wird.

2. Nutzerendgerät (20) nach Anspruch 1, wobei die Anzahl von Wiederholungen unter Verwendung höherschichtiger Signalisierung gemeldet wird.

3. Nutzerendgerät (20) nach einem von Anspruch 1 bis Anspruch 2, wobei das schmale Band sechs Ressourcenblöcke umfasst.

4. Funkbasisstation (10), die zum Kommunizieren mit einem Nutzerendgerät (20) konfiguriert ist, bei dem ein zu verwendendes Band auf ein schmales Band in einem Systemband beschränkt ist, wobei die Funkbasisstation (10) umfasst:
einen Übertragungsabschnitt (103), der zum Übertragen von Downlink-Steuerinformationen konfiguriert ist, die Übertragungsbestätigungsinformationen enthalten und ein schmales Band spezifizieren, in Reaktion auf einen Uplink-Datenkanal, über einen Downlink-Steuerkanal, der wiederholt übertragen wird, beginnend in einem Start-Subframe eines Zyklus;
einen Steuerabschnitt (104), der zum Steuern der Übertragung der Downlink-Steuerinformationen konfiguriert ist; und
wobei der Steuerabschnitt (104) zum Einstellen eines Timings für die Übertragung der Downlink-Steuerinformationen auf der Grundlage des Start-Subframes konfiguriert ist, und wobei der Zyklus auf der Grundlage der Anzahl von Wiederholungen des Downlink-Steuerkanals bestimmt wird.

5. Funkkommunikationsverfahren, das von einem Nutzerendgerät (20) durchgeführt wird, wobei ein von dem Nutzerendgerät verwendetes Band auf ein schmales Band in einem Systemband beschränkt ist, wobei das Funkkommunikationsverfahren umfasst:
Empfangen von Downlink-Steuerinformationen, die Übertragungsbestätigungsinformationen enthalten, als Reaktion auf einen Uplink-Datenkanal, über einen Downlink-Steuerkanal, der wiederholt übertragen wird, beginnend in einem Start-Subframe eines Zyklus; und
Steuern der erneuten Übertragung des Uplink-Datenkanals basierend auf den Übertragungsbestätigungsinformationen,
wobei ein Timing für die Übertragung der Downlink-Steuerinformationen basierend auf
dem Start-Subframe angepasst wird,
Steuern der erneuten Übertragung des Uplink-Datenkanals in einem schmalen Band, das durch die Downlink-Steuerinformationen spezifiziert ist, und wobei der Zyklus basierend auf der Anzahl von Wiederholungen des Downlink-Steuerkanals bestimmt wird.

## Revendications

1. Terminal utilisateur (20), dans lequel une bande à utiliser est limitée à une bande étroite dans une bande de système, le terminal utilisateur comprenant :
une section de réception (203) configurée pour recevoir des informations de commande de liaison descendante qui contiennent des informations d'accusé de réception de transmission en réponse à un canal de données de liaison montante, via un canal de commande de liaison descendante qui est transmis de manière répétée en commençant dans une sous-trame de démarrage d'un cycle ; et
une section de commande (204) configurée pour commander la retransmission du canal de données de liaison montante sur la base des informations d'accusé de réception de transmission,
dans lequel un instant pour la transmission des informations de commande de liaison descendante est ajusté sur la base de la sous-trame de démarrage,
dans lequel la section de commande (204) est configurée pour commander la retransmission du canal de données de liaison montante dans une bande étroite spécifiée par les informations de commande de liaison descendante, et
dans lequel le cycle est déterminé sur la base du nombre de répétitions du canal de commande de liaison descendante.

2. Terminal utilisateur (20) selon la revendication 1, dans lequel le nombre de répétitions est rapporté en utilisant une signalisation de couche supérieure.

3. Terminal utilisateur (20) selon une de la revendication 1 à la revendication 2, dans lequel la bande étroite est composée de six blocs de ressource.

4. Station de radiodiffusion de base (10) configurée pour communiquer avec un terminal utilisateur (20) dans lequel une bande à utiliser est limitée à une bande étroite dans une bande de système, la station de radiodiffusion de base (10) comprenant :
une section de transmission (103) configurée pour transmettre des informations de commande de liaison descendante qui contiennent des informations d'accusé de réception de transmission et spécifient une bande étroite, en réponse à un canal de données de liaison montante, via un canal de commande de liaison descendante qui est transmis de manière répétée en commençant dans une sous-trame de démarrage d'un cycle ;
une section de commande (104) configurée pour commander la transmission des informations de commande de liaison descendante ; et
dans lequel la section de commande (104) est configurée pour ajuster un instant pour la transmission des informations de commande de liaison descendante sur la base de la sous-trame de démarrage, et dans lequel le cycle est déterminé sur la base du nombre de répétitions du canal de commande de liaison descendante.

5. Procédé de radiocommunication mis en oeuvre par un terminal utilisateur (20), dans lequel une bande utilisée par le terminal utilisateur est limitée à une bande étroite dans une bande de système, le procédé de radiocommunication comprenant :
la réception d'informations de commande de liaison descendante contenant des informations d'accusé de réception de transmission en réponse à un canal de données de liaison montante, via un canal de commande de liaison descendante qui est transmis de manière répétée en commençant dans une sous-trame de démarrage d'un cycle ; et
la commande de la retransmission du canal de données de liaison montante sur la base des informations d'accusé de réception de transmission,
dans lequel un instant pour la transmission des informations de commande de liaison descendante est ajusté sur la base de la sous-trame de démarrage,
la commande de la retransmission du canal de données de liaison montante dans une bande étroite spécifiée par les informations de commande de liaison descendante, et
dans lequel le cycle est déterminé sur la base du nombre de répétitions du canal de commande de liaison descendante.
